**Europäisches Patentamt**

**European Patent Office**

**Office européen des brevets**

(19)

(11) Veröffentlichungsnummer : **0 124 678 B2**

# (12) NEUE EUROPÄISCHE PATENTSCHRIFT

(45) Veröffentlichungstag der neuen Patentschrift :
**06.05.92 Patentblatt 92/19**

(51) Int. Cl.$^5$ : **F16L 21/02**

(21) Anmeldenummer : **83890231.0**

(22) Anmeldetag : **22.12.83**

(54) **Dichtungsring aus gummielastischem Material zum Einlegen in eine Ringrille.**

(30) Priorität : **13.04.83 AT 1303/83**

(43) Veröffentlichungstag der Anmeldung :
**14.11.84 Patentblatt 84/46**

(45) Bekanntmachung des Hinweises auf die
Patenterteilung :
**17.11.88 Patentblatt 88/46**

(45) Bekanntmachung des Hinweises auf die
Entscheidung über den Einspruch :
**06.05.92 Patentblatt 92/19**

(84) Benannte Vertragsstaaten :
**AT BE CH DE FR GB IT LI LU NL SE**

(56) Entgegenhaltungen :
**DE-A- 1 475 715**

(56) Entgegenhaltungen :
**DE-A- 2 925 412**
**DE-C- 1 118 551**
**DE-U- 1 907 641**
**DE-U- 8 315 145**
**ES-U- 265 115**
**US-A- 4 343 480**

(73) Patentinhaber : **Schnallinger, Helfried M.**
**Westbahnstrasse 19**
**A-4470 Enns (AT)**

(72) Erfinder : **Schnallinger, Helfried M.**
**Westbahnstrasse 19**
**A-4470 Enns (AT)**

(74) Vertreter : **Hübscher, Heiner, Dipl.-Ing. et al**
**Patentanwälte Dipl.-Ing. Gerhard Hübscher,**
**Dipl.-Ing. Helmut Hübscher Dipl.-Ing. Heiner**
**Hübscher Spittelwiese 7**
**A-4020 Linz (AT)**

EP 0 124 678 B2

Jouve, 18, rue Saint-Denis, 75001 PARIS

## Beschreibung

Die Erfindung betrifft eine Rohrendmuffe oder einen Fitting gemäß Oberbegriff des Patentanspruchs 1.

Bekannte Dichtungsringe der gegenständlichen Art sind vorwiegend als Schnurdichtungen oder O-Ringe ausgebildet. Sie werden bis zur Verlegung der Rohre bzw. Fittinge lose mitgeführt und erst unmittelbar vor dem Zusammensetzen der genannten Bauteile zu Teilen von Abwasserleitungen usw. in die Ringrillen eingelegt. Dabei muss darauf geachtet werden, dass jeweils Dichtungsringe passenden Durchmessers verwendet werden. Vorwiegend werden verhältnismässig weiche Dichtungsringe verwendet. Diese passen sich häufig nicht ausreichend in die Ringrille ein, d.h. sie treten schon vor dem Einführen des Rohrendes in die mit der Ringrille versehene Muffe ganz oder teilweise aus der Ringrille aus. Dadurch wird das Zusammenstecken von Rohrende und Muffe behindert und mühsam bzw. es kommt vor, dass die Dichtung durch das eingeführte Rohr in die Muffe hineingeschoben wird, ohne zur Anlage auf der Rohraussenseite zu kommen. Dadurch kommt es häufig zu einem Lecken der Abwasserrohre.

Die Abwasserrohre und auch die passenden Fittinge stellen genormte Bauteile dar, bei denen auch die Abmessungen der Ringrillen zumindest hinsichtlich der Mindestgrössen festgelegt sind. Um einen ordnungsgemässen Sitz der Dichtungen zu erzielen, wurde es schon vorgeschlagen, die Dichtungsringe bei der Fertigung der Muffen bzw. Fittinge in die zunächst nur vorgeformten Ringrillen einzulegen und dann erst die Ringrillen in die Endform zu bringen, wobei die Dichtungsringe festgeklemmt werden. Das Einlegen der Dichtungsringe erfordert hier allerdings eine zusätzliche Verfahrensstufe, so dass der gesamte Herstellungsaufwand erhöht und insbesondere das Einlegen der Dichtungsringe nur in von Haus entsprechend vorbereiteten Fertigungsanlagen für die Rohrendmuffen und Fittinge möglich wird.

Dichtungsringe der gegenständlichen Art stellen ausgesprochene Massenartikel dar, die täglich in sehr grossen Stückzahlen benötigt werden. Jede Verbesserung der Gebrauchseigenschaften bedingt also insgesamt gesehen einen bedeutenden Fortschritt.

Aus dem ES-GM-265 115 ist ein Dichtungsring bekannt, der die Merkmale des Oberbegriffs des Anspruchs 1 aufweist.

Aufgabe der Erfindung ist die Schaffung eines Dichtungsringes der genannten Art, der mit einfachen Mitteln angebracht werden kann und sicher in der Ringrille gehalten wird, so dass er beim Transport nicht verlorengeht und sich beim Gebrauch in der richtigen Dichtungsstellung befindet.

Die gestellte Aufgabe wird durch die kennzeichnenden Merkmale aus PA1 gelöst.

Erfindungsgemäss wird somit der Dichtungsring in seiner Form an die Ringrille angepasst, so dass er von vornherein eingesetzt werden kann. Durch den Spannring wird der formschlüssige Halt, den der Dichtungsring schon durch seine ursprüngliche Form erhält, durch einen kraftschlüssigen Halt ergänzt, wobei die Dichtung zusätzlich gespannt und unverlierbar in der richtigen Lage in der Ringrille festgehalten wird. Der Dichtungsring kann somit ab der Fertigung der Rohrendmuffen bzw. Fittinge zu jedem beliebigen Zeitpunkt eingesetzt werden und geht auch beim Transport nicht verloren.

Es gehen von den Nutflanken der Aufnahmenut zwei nach innen gerichtete Dichtlippen aus. Auch diese Dichtlippen werden durch den eingesetzten Spannring gespannt und gegen stärkeres Ausweichen im Einschiebesinn des Rohres festgehalten, so dass eine gute Anlage der Dichtlippen am jeweils eingeführten Rohr gewährleistet ist.

Ein besonders vorteilhaftes Merkmal der Erfindung besteht darin, dass die Dichtlippen je einen sägezahnartigen Querschnitt haben.

Der Ring wird mit gegen das Einführende der Muffe od.dgl. weisenden Schrägflanken der den sägezahnartigen Querschnitt aufweisenden Dichtlippen angeordnet, wodurch das Einführen der Rohre erleichtert wird. Beide Dichtlippen werden durch den gemeinsamen Spannring vorgespannt und festgehalten.

Nach einer Möglichkeit ist der Spannring in sich geschlossen. Seine Innenlichte ist gleich oder grösser als die Lichtweite der Muffe bzw. des Fittings gehalten. Man kann den Spannring aber auch als geschlitzten Federspreizring ausbilden. Wie schon erwähnt ist es wichtig, dass der für die Einlage in die Ringrille bestimmte Teil des Dichtungsringes formschlüssig an die Querschnittsform der Ringrille angepasst ist, so dass er mit dem Spannring die Ringrille ausfüllt.

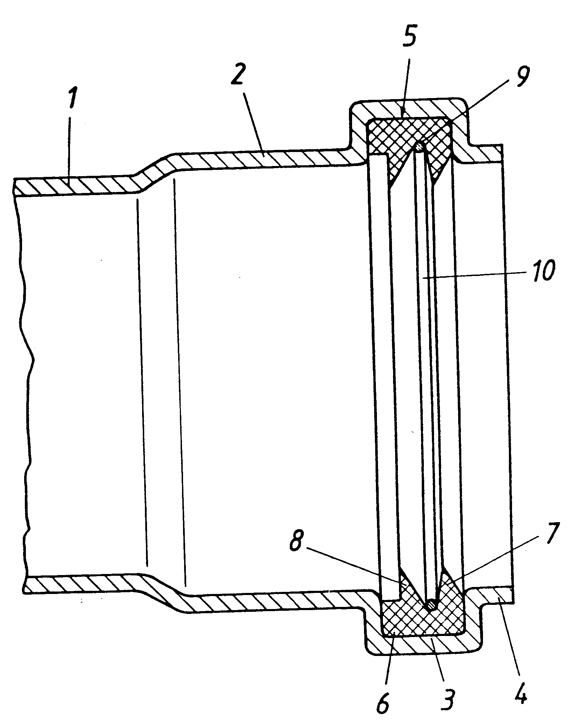

In der Zeichnung ist als Ausführungsbeispiel eine Endmuffe eines Abwasserrohres mit einem eingesetzten Dichtungsring im Schnitt dargestellt.

Ein aus Kunststoff hergestelltes Abwasserrohr 1 besitzt am einen Ende eine einteilig angeformte Muffe 2, in der eine meist genormte Ringrille 3 oder -sicke vorgesehen ist, an die zum Muffenende hin ein Rohransatz 4 anschliesst. Eine Endmuffe eines Fittings für solche Abwasserrohre hätte prinzipiell den gleichen Aufbau.

In die Ringrille 3 ist ein Dichtungsring 5 eingesetzt. Dieser besitzt einen Aussenteil 6, der formschlüssig an die Querschnittsform der Ringrille 3 angepasst ist, so dass er die Ringrille ausfüllt. Nach innen ragen bei eingesetztem Dichtungsring 5 aus der Ringrille 3 zwei Dichtungslippen 7, 8 über die Lichtweite der Muffe 2

EP 0 124 678 B2

vor, die einen sägezahnartigen Querschnitt und damit zum Muffenende 4 weisende Schrägflanken aufweisen. In eine zwischen den Dichtlippen 7, 8 gebildete Nut 9 ist ein Spannring 10 eingesetzt, dessen Lichtweite gleich oder grösser als der Innendurchmesser der Muffe 2 gehalten ist. Dieser Spannring hält den Dichtungsring 5 in der Ringrille 3 fest und spannt gleichzeitig den Ringteil 6 und die Dichtlippen 7, 8.

Beim Ausführungsbeispiel wurde ein in sich geschlossener Spannring 10 mit rundem Querschnitt dargestellt. Es sind auch andere Querschnittsformen, beispielsweise ein rechteckiger oder quadratischer Querschnitt möglich. Der Ring 10 kann in sich geschlossen oder auch als geschlitzter Federspreizring ausgeführt sein. Beim Ausführungsbeispiel ist die Nut 9 nach innen offen. Der Ring 10 könnte auch unverlierbar in den Dichtungsring 5 eingearbeitet sein. Es ist eine Herstellung des Ringes 10 aus Metall oder Kunststoff möglich.

## Patentansprüche

1. Rohrendmuffe (2) oder Fitting einer Kunststoff-Abwasserleitung, mit einem in eine einen rechteckigen Querschnitt aufweisende Ringrille (3) der Muffe (2) bzw. des Fittings einlegbaren Dichtungsring (5) aus gummielastischem Material, bei dem der für die Einlage in die Ringrille (3) bestimmte Teil (6) im Abstand von den Außenflanken eine nach innen offene Aufnahmenut (9) bildet, die einen Haltering (10) aufnimmt, dessen Lichtweite gleich oder größer als die Innenlichte der Muffe (2) bzw. des Fittings gehalten ist, und wobei beidseits der Nut (9) Dichtlippen (7, 8) angeordnet sind, die etwa gleich groß mit in entspanntem Zustand gleichen lichten Durchmessern ausgebildet sind und einen im westenlichen in Form eines sägezahnartigen Querschnitt mit einem zum Einführungsende der Muffe (2) bzw. des Fittings hin gerichteten flacheren Schenkel besitzen, dadurch gekennzeichnet, daß der für die Einlage in die Ringrille (3) bestimmte Teil (6) des Dichtungsringes (5) formschlüssig an die Rechteckform des Ringrillenquerschnittes angepaßt ist und die Ringrille (3) ausfüllt, daß die steileren Schenkel beider Dichtlippenquerschnitte jeweils einen höchstens rechtwinkeligen Innenwinkel aufweisen und daß der Haltering als Spannring (10) ausgebildet ist, der den eingelegten Dichtungsring (6) und die Dichtlippen (7, 8) vorspannt.

2. Rohrendmuffe oder Fitting nach Anspruch 1, dadurch gekennzeichnet, daß der Spannring (10) als geschlitzter Federspreizring ausgebildet ist.

## Claims

1. A pipe end sleeve (2) or a fitting of a plastics line for effluent, the sleeve (2) or fitting having an elastomeric ring seel (5) engageable in a rectangular-section annular groove (3) in the sleeve (2) or fitting, the ring part (6) which is adapted to engage in the annular groove (3) bounding at a distance from the outer flanks an inwardly open receiving groove (9) receiving a retaining ring (10) whose internal width is at least equal to the internal width of the sleeve (2) or fitting, there being disposed on both sides of the groove (9) sealing lips (7, 8) which are of substantially the same size and whose internal diameters are the same in the unstressed state and whose cross-section is substantially of sawtooth shape, the flatter arm thereof being directed towards the entry end of the sleeve (2) or fitting, characterised in that the said ring part (6) co-operates positively with the rectangular shape of the ring groove cross-section and fille up the ring groove (3), the steeper arms of the two sealing lip cross sections each have an internal angle which is at most a right angle and the retaining ring is a clamping ring (10) acting on the engaged ring seal (6) and sealing lips (7, 8).

2. A pipe end sleeve or fitting according to claim 1, characterised in that the clamping ring (10) is a split resilient expanding ring.

## Revendications

1. Manchon de tuyau (2) ou pièce de robinetterie d'une conduite d'eau usée en plastique, comportant un anneau d'étanchéité (5) en matériau élastique de gomme pouvant être inséré dans une rainure (3) du manchon (2) ou de la pièce de robinetterie présentant une section transversale rectangulaire, anneau d'étanchéité dont la pièce (6) destinée à être insérée dans la rainure (3) forme à distance des flancs extérieurs une rainure de réception (9) ouverte vers l'intérieur qui reçoit un anneau de fixation (10) dont le diamètre est identique ou supérieur au diamètre intérieur du manchon (2) ou de la pièce de robinetterie, des lippes d'étanchéité (7, 8) étant disposées de part et d'autre de la rainure (9) qui sont formées à peu près de la même taille et présentent un diamètre identique à l'état détendu et présentent une section transversale substantiellement en forme de dent de scie dont le flanc plus plat est dirigé vers l'extrémité d'insertion du manchon (2) ou de la pièce de robinetterie,

3

caractérisé en ce que la pièce (6) destinée à être insérée dans la rainure (3) de l'anneau d'étanchéité (5) est parfaitement adaptée à la forme rectangulaire de la section transversale de la rainure et remplit la rainure annulaire (3) de sorte que les flancs plus raides des deux sections transversales des lippes d'étanchéité présentent un angle intérieur droit au maximum et que l'anneau de fixation est formé comme anneau de serrage (10) qui précontraint l'anneau d'étanchéité (6) inséré et les lippes d'étanchéité (7, 8).

2. Manchon de tuyau (2) ou pièce de robinetterie selon la revendication 1, caractérisé en ce que l'anneau de serrage (10) est formé comme anneau d'écartement élastique fendu.